**Europäisches Patentamt**

**European Patent Office**

**Office européen des brevets**

(19)

(11) Veröffentlichungsnummer: **0 083 903**
**B1**

(12) **EUROPÄISCHE PATENTSCHRIFT**

(45) Veröffentlichungstag der Patentschrift:
27.04.88

(21) Anmeldenummer: **82730116.9**

(22) Anmeldetag: **03.09.82**

(51) Int. Cl.⁴: **F 16 F 15/04,** F 01 D 25/28,
F 16 M 7/00

(54) **Elastisches Lagerungselement, insbesondere Federkörper.**

(30) Priorität: **11.01.82 DE 3200816**

(43) Veröffentlichungstag der Anmeldung:
**20.07.83 Patentblatt 83/29**

(45) Bekanntmachung des Hinweises auf die Patenterteilung:
**27.04.88 Patentblatt 88/17**

(84) Benannte Vertragsstaaten:
**FR GB IT**

(56) Entgegenhaltungen:
**DE-B-1 195 556**
**DE-B-1 201 621**
**DE-C-727 537**
**DE-C-842 732**
**DE-C-1 241 202**
**GB-A-1 116 678**
**US-A-4 048 842**

**ELIN-ZEITSCHRIFT, Band 9, Nr. 2, Juni 1957, Seite 67, Wien, AT; "Die neue Hochdruckdampfanlage der Kartonfabrik Frohnleiten"**

(73) Patentinhaber: **GERB Gesellschaft für Isolierung mbH & Co. KG, Roedernallee 174- 176, D-1000 Berlin 51 (DE)**

(72) Erfinder: **Delam, Heinz, Blakenheideweg 3, D-1000 Berlin 20 (DE)**

(74) Vertreter: **Müller- Börner, Richard, Dipl.- Ing., Patentanwälte Müller- Börner & Wey Widenmayerstrasse 49, 8000 München 22 (DE)**

## Beschreibung

Die Erfindung betrifft ein elastisches Lagerungselement gemäß dem Gattungsbegriff der beiden nebengeordneten Hauptansprüche.

Bei der Aufstellung von Maschinen ist in vielen Fällen eine elastische Lagerung vorgesehen. Die elastischen Lagerungselemente bestehen aus Gummi oder Neopren oder werden durch Stahlfedern in Form sogenannter Federkörper gebildet. Die elastischen Lagerungselemente mindern die Übertragung von Schwingungen, wobei gleichzeitig mehrfach gestützte, statisch unbestimmt gelagerte Fundamente in nahezu statisch bestimmte Systeme überführt werden. Die geringeren Zwänge durch die elastische Lagerung erlauben es, Fundamente leichter und damit wirtschaftlicher auszuführen als die nach der alten DIN 4024 (Januar 1955) erforderlich gewesenen biegesteifen Fundamente.

Die elastische Lagerung ist besonders bei großen bzw. langen Maschinen mit mehreren Wellenlagern und durchgehenden Wellenzügen, beispielsweise von Turbogeneratorsätzen, bekannt. Dabei werden die elastischen Lagerungselemente vor dem Aufbau des Fundamentes entsprechend der Biegelinie des Fundamentes für die zu erwartenden Betriebslasten vorgespannt. Während der Montage der Maschine wird das Fundament auch mit Hilfe von Distanzblechen oder auch über Hydraulikkolben und Blockierspindeln nachgespannt. Aus der ELIN-Zeitschrift, Band 9, Nr. 2, Juni 1957, Seite 67, ist ein elastisches Lagerungselement für eine biegeelastische Fundamentplatte zur elastischen Aufstellung von Maschinen mit einem Stahlschraubenfedern enthaltenden Federkörper und einer Stellvorrichtung zur Einstellung der Tragkraft des Lagerungselementes bekannt, wobei der Federkörper über den gesamten Stellbereich der Stellvorrichtung mit der Fundamentplatte verbindbar ist. Dabei wird zwar über eine Veränderung der Tragkräfte eine Veränderung der Lagerungsbedingungen der Fundamentplatte bewirkt, doch eignet sich die dabei verwendete Stellvorrichtung nicht dazu, eine vergleichsweise steife, einstückige Fundamentplatte mit kleinen Beträgen feinfühlig zu verformen, wie dies für die ständige Regulierung von Wellensträngen von Turbosätzen erforderlich ist.

Aus der DE-C 12 41 202 sind Lagerungselemente für Maschinen mit Stellvorrichtungen bekannt, bei denen zur Verstellung eine lösbar gestaltete Keilverbindung vorgesehen ist. Auch hierbei ist es jedoch nicht möglich, über große Stellwege am elastischen Lagerungselement eine feinfühlige Verformung der einstückigen Fundamentplatte zu erzielen.

Der Erfindung liegt daher die Aufgabe zugrunde, ein elastisches Lagerungselement zu schaffen, mittels dem vom Betriebszustand der Maschinen abhängigen Lagerungsbedingungen laufend unabhängig und feinfühlig eingestellt werden können.

Diese Aufgabe wird erfindungsgemäß mit den im Kennzeichen der beiden nebengeordneten Hauptansprüche angegebenen Mitteln gelöst.

Auf diese Weise kann die Höhe bzw. die Vorspannung und daher die Tragkraft des Lagerungselements verändert werden.

Die sich daraus wiederum ergebende Änderung der Auflagebedingung bewirkt das Aus- oder Nachrichten des Wellenzuges über die entsprechend veränderte Biegelinie der biegeelastischen Fundamentplatte.

Die Stellvorrichtung zur Einstellung der Tragkraft des Lagerungselementes weist erfindungsgemäß eine verstellbare Keilanordnung und mehrere Hydraulikkolben auf, wobei die Tragkraft des Lagerungselementes über die die Federspannung des Federkörpers beeinflussende Keilanordnung einstellbar ist, die für den Verstellvorgang mittels Hydraulikkolben zu lösen und zu entlasten ist. Anstelle der Hydraulikkolben zur Verstellung der Keilanordnung läßt sich ebenso eine elektromagnetische Einrichtung verwenden. Sie ermöglicht ebenso wie die Hydraulik das Lösen der festen Verbindung, die Wellenstrangausrichtung, das Verschieben der Blockierungseinrichtung auf die neue Vorspannung und danach die Wiederherstellung der festen Verbindung.

Zur Erfassung des Zustands und der Lage der Keilanordnung bzw. zur Erfassung des Zustands und der Größe der Tragkraftveränderung des Lagerungselementes kann vorteilhafterweise je eine Meßvorrichtung vorgesehen sein, so daß die Ausrichtung des Wellenstranges automatisierbar ist. Durch Einführen eines Rechenvorganges, z. B. in einem Mikroprozessor, ist eine Selbstoptimierung möglich, die Ausrichtzustände ermöglicht, deren Genauigkeit nur noch von der Genauigkeit der Meßverfahren abhängig ist.

Die hohe wirtschaftliche Bedeutung derartig gestalteter elastischer Elemente wird besonders bei deren Verwendung für die Lagerng von Turbogeneratoren in Kraftwerken deutlich. Außer der kostengünstigeren Ausführung des Fundamentes hängt z. B. beim Betrieb der Anlage der Abstand zwischen zwei Wartungen unter anderem wesentlich von der Laufruhe des Aggregates bzw. vom Zustand der Wellenausrichtung ab. Für diese Wartungen muß die Anlage aus dem Netz genommen und der Turbogenerator angehalten werden. Das Nachrichten des Wellenzuges wird dann an den Maschinengehäusen selbst vorgenommen.

Das Wartungsintervall kann nach Einsatz der elastischen Elemente mit Stellvorrichtung nicht nur erheblich vergrößert werden, sondern es werden gleichzeitig die beim Wiederanfahren zwangsläufig eintretenden Wärmedehnungen, die den Ausrichtzustand verändern, ausgeglichen. Eine Verminderung des Verschleißes ist neben den anderen Vorteilen ebenfalls zu erwarten.

Der Gegenstand der Erfindung ist in der Zeichnung beispielsweise dargestellt und wird nachstehend ausführlich erläutert. Es zeigen:

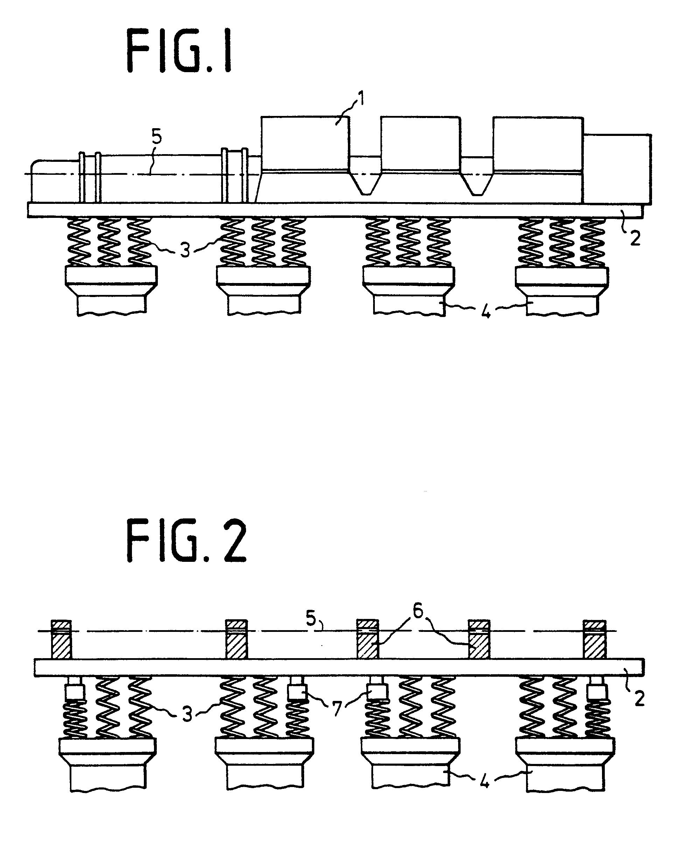

Fig. 1 eine schematische Längsansicht eines elastisch aufgestellten Turbogeneratorsatzes;

Fig. 2 eine der Fig. 1 ähnliche Längsansicht mit Andeutung des Wellenzuges des Turbogeneratorsatzes, wobei die Lagerungselemente erfindungsgemäß ausgestaltet sind;

Fig. 3 eine vergrößerte Einzelheit aus Fig. 2, und Fig. 4 eine gegenüber Fig. 3 weiter vergrößerte Einzelheit der Erfindung.

Ein Turbogeneratorsatz 1 ist auf einer Fundamentplatte 2 aufgestellt. Zur elastischen Aufstellung des Turbosatzes 1 ist die im allgemeinen biegeelastische Fundamentplatte 2 auf an sich bekannten elastischen Federkörpern 3 gelagert, die ihrerseits auf Fundamentstützen 4 angeordnet sind. Ein Wellenzug 5 des Turbosatzes 1 ist in Lagerböcken 6 gelagert, die ihrerseits auf der Fundamentplatte 2 aufgestellt sind.

Bei der erstmaligen Aufstellung des Turbosatzes 1 werden die Federkörper 3 entsprechend der Biegelinie der Fundamentplatte 2 vor dessen Aufbau für die zu erwartenden Betriebslasten vorgespannt. Dann wird die Fundamentplatte 2 in an sich bekannter Weise nachgespannt, so daß völlige Laufruhe des Wellenzuges 5 im Betrieb zu erwarten ist. Ein Nachspannen während des späteren Betriebes findet nicht statt, sondern das von Zeit zu Zeit erforderlich werdende Nachrichten erfolgt durch Ausrichten der Lagerböcke 6 o.dgl. während der Wartungen, d.h. im Stillstand der Maschine.

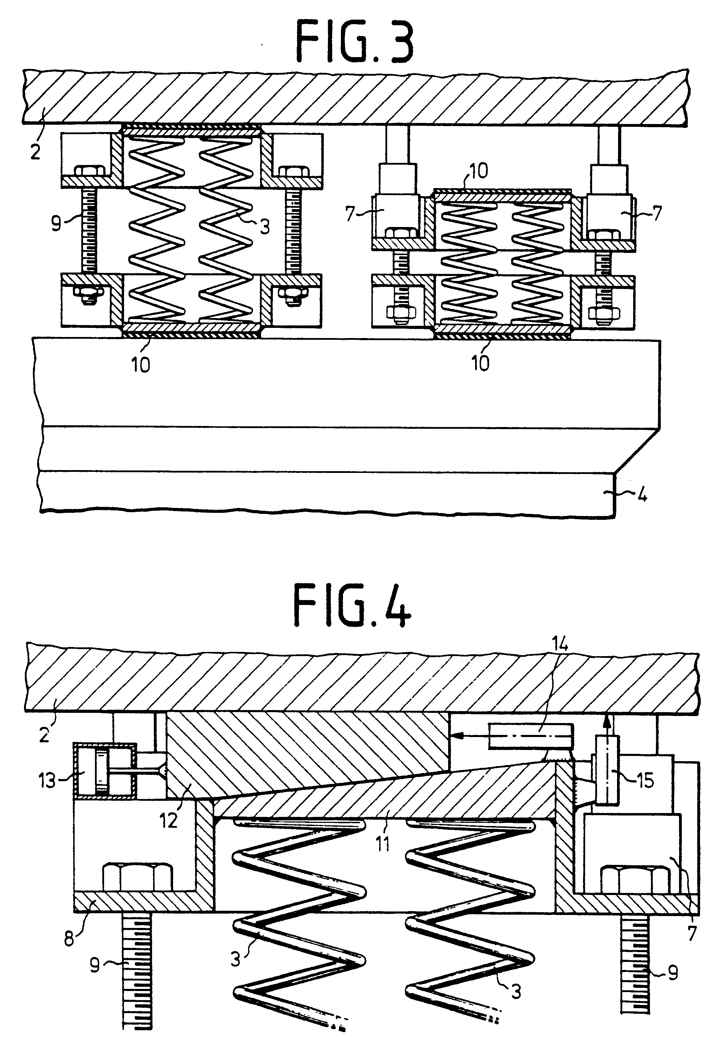

Gemäß der Erfindung sind in den Federkörpern 3 gesonderte Stelleinrichtungen 7 angebracht, die zum dauernden Verbleib sind und über eine Veränderung der Tragkräfte der Federkörper 3 eine Veränderung der Lagerungsbedingungen für den Wellenstrang 5 bewirken. Wie insbesondere Fig. 3 erkennen läßt, sind hydraulische Stelleinrichtungen (Hydraulikkolben) 7 in der Federkörperschale 8 angeordnet, so daß eine gleichförmige Änderung der Tragkraft des Federkörpers 3 bei Betätigung der Stelleinrichtungen 7 erfolgt. Schrauben 9 dienen zur Vorspannung vor der Montage. Zwischenlagen 10 sorgen für eine einwandfreie, insbesondere rutschfeste Verbindung zwischen Federkörper 3 und Fundamentplatte 2 bzw. Fundamentstützen 4.

Damit das Gewicht der Fundamentplatte 2 nicht unmittelbar auf den Stempeln der Stelleinrichtungen 7 aufliegt, ist eine feste Verbindung zwischen den Federkörpern 3 und der Fundamentplatte 2 über den ganzen Stellbereich mittels einer verstellbaren Keilverbindung 11, 12 vorgesehen, wie aus Fig. 4 ersichtlich ist. Eine die Federkörperschale 8 oben abschließende, keilförmig ausgebildete Platte 11 dient als schiefe Ebene für einen Keil 12.

Die Keilverbindung 11, 12 ist nachstellbar und wird durch Betätigung der Stelleinrichtungen 7 gelöst. Ein Stellzylinder 13 übernimmt die notwendige Verstellung des Keils 12 in der als Blockiereinrichtung dienenden Keilverbindung. Die Keile tragen dabei die Fundamentplatte, wodurch die Stelleinrichtungen 7 entlastet wird.

Die hydraulischen Stelleinrichtungen können durch eine elektromagnetische Einrichtung ersetzt werden.

Eine Meßeinrichtung 14 dient zur Erfassung des Zustandes bzw. der Lage des Keils 12. Eine weitere Meßeinrichtung 15 dient zur Erfassung des Zustandes bzw. der Größe der Tragkraftveränderung des Federkörpers 3. Die entsprechenden Daten der Zustandsmelder 14 und 15 ermöglichen durch Anwendung bekannter Grundsätze der Prozeßrechnung eine ständige automatische Nachrichtung des Wellenzuges 5 in Abhängigkeit von den auftretenden Zustandsänderungen.

**Patentansprüche**

1. Elastisches Lagerungselement für eine biegeelastische Fundamentplatte zur elastischen Aufstellung von Maschinen mit einem Stahlschraubenfedern enthaltenden Federkörper (3) und einer Stellvorrichtung zur Einstellung der Tragkraft des Lagerungselementes, wobei der Federkörper (3) über den gesamten Stellbereich der Stellvorrichtung mit der Fundamentplatte verbindbar ist, dadurch gekennzeichnet, daß die Stellvorrichtung eine verstellbare Keilanordnung (11, 12) und mehrere Hydraulikkolben (7) aufweist, wobei die Tragkraft des Lagerungselementes über die die Federspannung des Federkörpers beeinflussende Keilanordnung (11, 12) einstellbar ist, die für den Verstellvorgang mittels Hydraulikkolben (7) zu lösen und zu entlasten ist.

2. Elastisches Lagerungselement für eine biegeelastische Fundamentplatte zur elastischen Aufstellung von Maschinen mit einem Stahlschraubenfedern enthaltenden Federkörper (3) und einer Stellvorrichtung zur Einstellung der Tragkraft des Lagerungselementes, wobei der Federkörper (3) über den gesamten Stellbereich der Stellvorrichtung mit der Fundamentplatte verbindbar ist, dadurch gekennzeichnet, daß die Stellvorrichtung eine verstellbare Keilanordnung (11, 12) und eine elektromechanische Einrichtung aufweist, wobei die Tragkraft des Lagerungselementes über die die Federspannung des Federkörpers beeinflussende Keilanordnung (11, 12) einstellbar ist, die für den Verstellvorgang mittels der elektromechanischen Einrichtung zu lösen und zu entlasten ist.

3. Elastisches Lagerungselement nach Anspruch 1 oder 2, gekennzeichnet durch eine Meßvorrichtung (14), die den Zustand und die Lage der Keilverbindung (11, 12) zwischen dem Lagerungselement und der Fundamentplatte (2) erfaßt.

4. Elastisches Lagerungselement nach einem der Ansprüche 1 bis 3, gekennzeichnet durch eine Meßvorrichtung (15), die den Zustand und die Größe der Tragkraftveränderung des
Lagerungselementes erfaßt.

## Claims

1. Elastic mounting element, for a flexible foundation plate for the elastic installation of machines, having a spring body (3), comprising steel helical springs, and a regulating dewice for setting the supporting force of the mounting element, it being possible to connect the spring body (3) with the foundation plate over the whole regulating range of the regulating device, characterised in that the regulating device has an adjustable wedge arrangement (11, 12) and several hydraulic pistons (7), it being possible to set the supporting force of the mounting element by way of the wedge arrangement (11, 12) which affects the spring tension of the spring body and which is to be loosened and unloaded for the adjusting process by means of hydraulic pistons (7).

2. Elastic mountig element, for a flexible foundation plate for the elastic installation of machines, having a spring body (3), comprising steel helical springs, and a regulating device for setting the supporting force of the mounting element, it being possible to connect the spring body (3) with the foundation plate over the whole regulating range of the regulating device, characterised in that the regulating device has an adjustable wedge arrangement (11, 12) and an electromechanical device, it being possible to set the supporting force of the mounting element by way of the wedge arrangement (11, 12) which affects the spring tension of the spring body and which is to be loosened and unloaded for the adjusting process by means of the electromechanical device.

3. Elastic mounting element according to claim 1 or 2, characterised by a measuring device (14) which detects the state and the position of the wedge connection (11, 12) between the mounting element and the foundation plate (2).

4. Elastic mounting element according to one of the claims 1 to 3, characterised by a measuring device (15) which detects the state and the size of the supporting force variation of the mounting element.

## Revendications

1. Elément de support élastique pour une plaque de fondation élastiquement flexible destinée au montage élastique des machines avec un élément à ressorts (3) contenant des ressorts hélicoïdaux en acier et un dispositif de réglage pour l'ajustement de la force portante de l'élément de support, dans lequel l'élément à ressorts (3) peut être lié à la plaque de fondation sur toute la gamme d'ajustement du dispositif de réglage, caractérisé en ce que le dispositif de réglage comporte un système de coins ajustable (11, 12) et plusieurs vérins hydrauliques (7), par quoi la force portante de l'élément de support est ajustable par le système de coins (11, 12) agissant sur la tension des ressorts de l'élément à ressorts, qui peut être détendue et relaxée pour le processus de réglage au moyen des vérins hydrauliques (7).

2. Elément de support élastique pour une plaque de fondation élastiquement flexible destinée au montage élastique des machines avec un élément à ressorts (3) contenant des ressorts hélicoïdaux en acier et un dispositif de réglage pour l'ajustement de la force portante de l'élément de support, dans lequel l'élément à ressorts (3) peut être lié à la plaque de fondation sur toute la gamme d'ajustement du dispositif de réglage, caractérisé en ce que le dispositif de réglage comporte un système de coins (11, 12) ajustable et un arrangement électromécanique, par quoi la force portante de l'élément de support est réglée par le système de coins (11, 12) agissant sur la tension des ressorts de l'élément à ressorts, qui peut être détendue et relaxée au moyen de l'arrangement électromécanique.

3. Elément de support élastique selon l'une des revendications 1 ou 2, caractérisé par un dispositif de mesure (14) qui indique l'état et la situation de la liaison à coins (11, 12) entre l'élément de support et la plaque de fondation (2).

4. Elément de support selon l'une des revendications 1 à 3, caractérisé par un dispositif de mesure (15), qui indique l'état et la grandeur de la variation de la force portante de l'élément de support.

# FIG. 1

# FIG. 2

0 083 903

# FIG.3

# FIG.4